# FASCICULE DE BREVET EUROPEEN

(11) **EP 2 714 443 B1**
(45) Date de publication et mention de la délivrance du brevet: **08.07.2015**
(21) Numéro de dépôt: 12728669.8
(22) Date de dépôt: 14.05.2012
(51) Int. Cl.: B60H 1/32, F25B 15/06, F25B 37/00, F25B 15/00

(54) **PLAQUE D'ABSORPTION POUR CLIMATISEUR**
ABSORPTIONSPLATTE FÜR EINE KLIMAANLAGE
ABSORPTION PLATE FOR AN AIR-CONDITIONER

(30) Priorité: 27.05.2011 FR 1154624; 27.05.2011 FR 1154625; 27.05.2011 FR 1154626
(43) Date de publication de la demande: 09.04.2014
(73) Titulaire: Peugeot Citroën Automobiles SA, 78140 Vélizy Villacoublay (FR)
(72) Inventeur: HERBERT, Vincent, 91400 Orsay (FR); GOULET, Remi, 78000 Versailles (FR)
(86) Numéro de dépôt international: PCT/FR2012/051060
(87) Numéro de publication internationale: WO 2012/164188

(56) Documents cités:
- EP-A1- 2 213 963
- DE-A1- 2 848 386
- DE-A1-102008 044 482
- FR-A1- 2 900 722
- FR-A1- 2 921 467
- GB-A- 2 130 499
- US-A- 4 338 268
- US-A- 4 534 175
- US-A- 5 704 417

## Description

La présente invention concerne de manière générale une plaque d'absorption pour climatiseur monté sur un véhicule automobile.

Il est connu dans l'art antérieur des dispositifs de climatisation par absorption. Par exemple, le document FR 2 941 773 décrit un climatiseur par absorption comprenant des plaques d'absorption dans lesquelles un fluide absorbant, du bromure de lithium circule et absorbe un fluide réfrigérant, de la vapeur d'eau. En contrepartie, ce système présente notamment l'inconvénient de présenter une efficacité limitée par les capacités d'absorption par le fluide absorbant en fluide réfrigérant. En effet, lors de la réaction exothermique d'absorption en surface, le fluide absorbant, du bromure de lithium en contact avec le fluide réfrigérant, de la vapeur d'eau, chauffe et la couche de surface est rapidement saturée en fluide réfrigérant. L'absorption est limitée par la vitesse de transfert vers le coeur du flux de la chaleur dégagée et/ou du fluide réfrigérant. Il en résulte une efficacité globale assez faible du système car la vitesse de transfert (de la chaleur dégagée et du fluide réfrigérant absorbé) en direction du coeur du flux de solution absorbante limite très fortement les capacités d'absorption lors de la traversée de la plaque.

EP 2213963 A1 décrit une plaque d'absorption selon la préambule de la revendication 1.

Par ailleurs, le document US 4 223 539 décrit un autre type de climatiseur par absorption où le fluide absorbant est projeté sur des tubes réfrigérants où il s'écoule et absorbe le fluide réfrigérant, et la surface de ces tubes comporte des protubérances créant une turbulence de surface. Une telle mise en oeuvre est coûteuse car le procédé de fabrication de protubérances à la surface d'un tube n'est pas aisé à mettre en oeuvre et sa faisabilité à l'échelle industrielle n'est pas démontrée. Par ailleurs, cette mise en oeuvre lie les protubérances à la surface sur laquelle s'écoule le fluide et cela rend difficile toute modification des protubérances ou de la surface. Cela complique aussi l'approvisionnement car la complexité d'un tel composant limite le nombre de fournisseurs. Cette mise en oeuvre n'est donc pas adaptable au domaine automobile où la flexibilité et les coûts sont un paramètre directeur de la conception. Enfin, l'encombrement d'un tel système ne permet pas son intégration dans un véhicule, compte tenu des contraintes géométriques.

Un but de la présente invention est de répondre aux inconvénients des documents de l'art antérieur mentionnés ci-dessus et en particulier, tout d'abord, de proposer un climatiseur par absorption qui présente un rendement élevé d'absorption sans pour autant nécessiter de composants complexes pour sa mise en oeuvre.

Pour cela un premier aspect de l'invention concerne une plaque d'absorption de climatiseur pour véhicule, conforme à l'objet de la revendication 1.

Des variantes suivent ensuite en référence aux revendications 2 à 26.

La plaque selon la présente invention améliore l'efficacité de l'absorption par le fluide absorbant en homogénéisant le flux le long de la surface d'échange. En d'autres termes, tout au long de l'écoulement, la température du fluide absorbant, et/ou la concentration en fluide réfrigérant dans le fluide absorbant, tend à être homogène, de sorte qu'il y a peu de différence de température et de concentration entre la couche de surface et la zone au coeur du film.

Ces moyens de turbulence et/ou d'instabilité selon cette mise en oeuvre sont efficaces pour homogénéiser le flux de fluide absorbant. Ils tirent parti des caractéristiques du flux pour augmenter son instabilité afin de provoquer des courants tourbillonnaires qui vont homogénéiser la température du flux de fluide absorbant et/ou la concentration en fluide réfrigérant du flux de fluide absorbant. Ces moyens de turbulence et/ou d'instabilité ne vont pas complexifier la plaque outre mesure car ils sont distincts de la surface d'échange qui est généralement complexe. L'invention laisse la possibilité de standardiser les plaques et maintenir un coût de fabrication intéressant tout en améliorant l'efficacité d'absorption avec les moyens de turbulence distincts.

La plaque selon la présente invention améliore encore l'efficacité de l'absorption par le fluide absorbant en opérant au moins un mélange du flux le long de la surface d'échange afin d'uniformiser la température et la concentration en fluide réfrigérant. En d'autres termes, la couche de surface est mélangée au reste du fluide absorbant, de sorte que la couche de surface en aval des moyens de mélange ne soit pas saturée en fluide réfrigérant. En conséquence, le fluide absorbant, en aval des moyens d'homogénéisation, peut ensuite absorber à nouveau le fluide réfrigérant efficacement.

Un second aspect de l'invention est un climatiseur pour véhicule comprenant au moins une plaque d'absorption selon le premier aspect de l'invention.

Un dernier aspect de l'invention est un véhicule automobile comportant au moins un climatiseur selon le deuxième aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une plaque d'absorption selon l'art antérieur ;
- la figure 2 représente une plaque d'absorption selon un premier mode de réalisation de l'invention ;
- la figure 3 représente une plaque d'absorption selon un deuxième mode de réalisation de l'invention ;
- la figure 4, représente une plaque d'absorption selon un troisième mode de réalisation de l'invention ;
- la figure 5 représente une plaque d'absorption selon un quatrième mode de réalisation de l'invention ;
- la figure 6 représente une plaque d'absorption selon un cinquième mode de réalisation de l'invention ;
- la figure 7 représente une plaque d'absorption selon un sixième mode de réalisation de l'invention ;
- la figure 8 représente une plaque d'absorption selon un septième mode de réalisation de l'invention ;
- la figure 9 représente une plaque d'absorption selon un huitième mode de réalisation de l'invention, vue de face ;
- la figure 10, représente la plaque de la figure 9 en coupe ;
- la figure 11 représente une plaque d'absorption selon un neuvième mode de réalisation de l'invention, vue de face ; et
- la figure 12 représente la plaque de la figure11 en coupe.

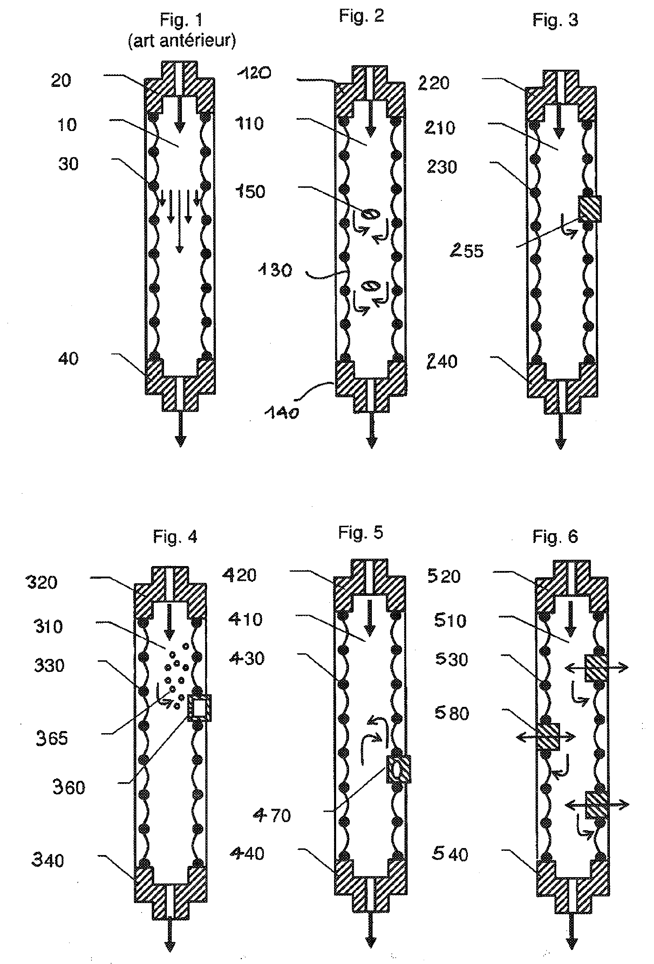

La figure 1 représente une plaque d'absorption telle que celles connues dans l'art antérieur. Deux grilles 30 définissent un conduit dans lequel circule par gravité un flux de fluide absorbant 10, du bromure de lithium par exemple. Un cadre solidarise les grilles 30 et sa partie supérieure 20 comporte un trou d'alimentation par lequel entre le fluide absorbant entre les deux plaques. La partie inférieure 40 comporte quant à elle un trou d'évacuation relié au reste du circuit de fluide absorbant. L'écoulement entre les deux plaques est essentiellement laminaire, tel que le montrent les flèches entre les grilles 30. La plaque est agencée dans un réservoir contenant une phase gazeuse riche en vapeur de réfrigérant. Cela peut être de l'eau sous forme de vapeur, par exemple.

Au cours de son trajet entre les deux plaques, le bromure de lithium va absorber l'eau au travers des grilles 30, dans sa couche externe. Celle-ci va se charger en eau et sa concentration en eau de la solution saline de bromure de lithium va augmenter, ainsi que sa température. La capacité d'absorption est limitée par la vitesse de transfert en direction du coeur du flux de solution saline du réfrigérant absorbé à la surface de la solution saline et de la chaleur dégagée. Dans le cas d'un flux de bromure de lithium laminaire ou faiblement instable, la chaleur dégagée à la surface et le réfrigérant absorbé diffusent très lentement en direction du coeur du flux de solution saline.

La figure 2 représente une plaque selon un premier mode de réalisation de l'invention, où deux obstacles 150 sont agencés dans le flux de bromure de lithium 110. Ces obstacles forment des points d'arrêt pour le fluide et en aval de chaque obstacle 150, des remous, des tourbillons sont provoqués, de sorte que l'écoulement devient instable et une homogénéisation de la température et/ou de la concentration en eau dans le bromure de lithium s'opère. La couche externe du flux se mélange dans le reste du flux et la température et/ou la concentration en eau du bromure de lithium baisse dans la zone à proximité de la grille, ce qui permet d'augmenter l'efficacité de l'absorption et du climatiseur. Les obstacles 150 sont par exemple reliés au cadre par un fil, et leur forme peut être variée (prismatique, sphérique ou même quelconque).

La figure 3 représente une deuxième mode de réalisation de l'invention, l'obstacle 255 est agencé sur une grille. La présence de l'obstacle 255 dans le flux 210 provoque un point d'arrêt d'une part et une variation de la section de l'écoulement d'autre part. Il en résulte un accroissement de l'instabilité de l'écoulement et sa turbulence augmente.

Les veines du flux initial vont se mélanger et la température et/ou la concentration en eau dans le bromure de lithium va s'homogénéiser, de sorte que l'efficacité de l'absorption est améliorée. Avantageusement, l'obstacle 255 est fixé à la grille et au cadre et sert de renfort. L'invention propose d'une part une augmentation de l'efficacité du climatiseur et permet dans le même temps d'augmenter la rigidité des plaques.

La figure 4 représente un troisième mode de réalisation de l'invention où de la vapeur de réfrigérant est injectée dans le flux 310 sous forme de bulles. A cet effet, un conduit 360 relié à une zone de vapeur de réfrigérant à haute pression est placé sur une grille et peut injecter des bulles de réfrigérant (365) dans le flux 310. Les bulles de réfrigérant vont remonter dans le flux et leur mouvement provoque des instabilités et des remous turbulents dans le flux 310 de bromure de lithium provoquant une homogénéisation de la température et/ou de la concentration en eau dans le bromure de lithium. Avantageusement, le conduit 360 sert de renfort à la grille et permet de rigidifier la plaque en étant relié au cadre. On peut également envisager d'injecter dans le flux de bromure de lithium de la vapeur prélevée dans le réservoir, ce qui augmente encore l'efficacité du système.

La figure 5 représente un quatrième mode de réalisation de l'invention. Le flux 410 est chauffé localement par une résistance électrique 470 placée sur une grille. L'augmentation de température locale de la solution saline de bromure de lithium génère une force de flottabilité à l'origine d'un écoulement s'opposant au flux principal 410, ce qui va forcer une homogénéisation de la température et/ou de la concentration en eau dans le bromure de lithium. Avantageusement, la résistance 470 sert de renfort à la grille et permet de rigidifier la plaque en étant reliée au cadre.

La figure 6 représente un cinquième mode de réalisation de l'invention. Des vibrateurs 580 sont fixés à la grille et mettent celle-ci en vibration. La section de l'écoulement est en conséquence modifiée, ce qui provoque une augmentation de son instabilité, la turbulence s'accroît.

Les veines de flux du bromure vont alors se mélanger et la température et/ou la concentration en eau dans le bromure de lithium s'homogénéise. L'efficacité est améliorée. Avantageusement, les vibrateurs 580 servent de renfort à la grille et permettent de rigidifier la plaque en étant relié au cadre. Les vibrateurs sont agencés en quinconce et vibrent en opposition de phase. La section de l'écoulement est donc fortement modifiée et elle est fortement hétérogène tout au long de l'écoulement. L'homogénéisation est fortement améliorée avec cette mise en oeuvre particulièrement avantageuse.

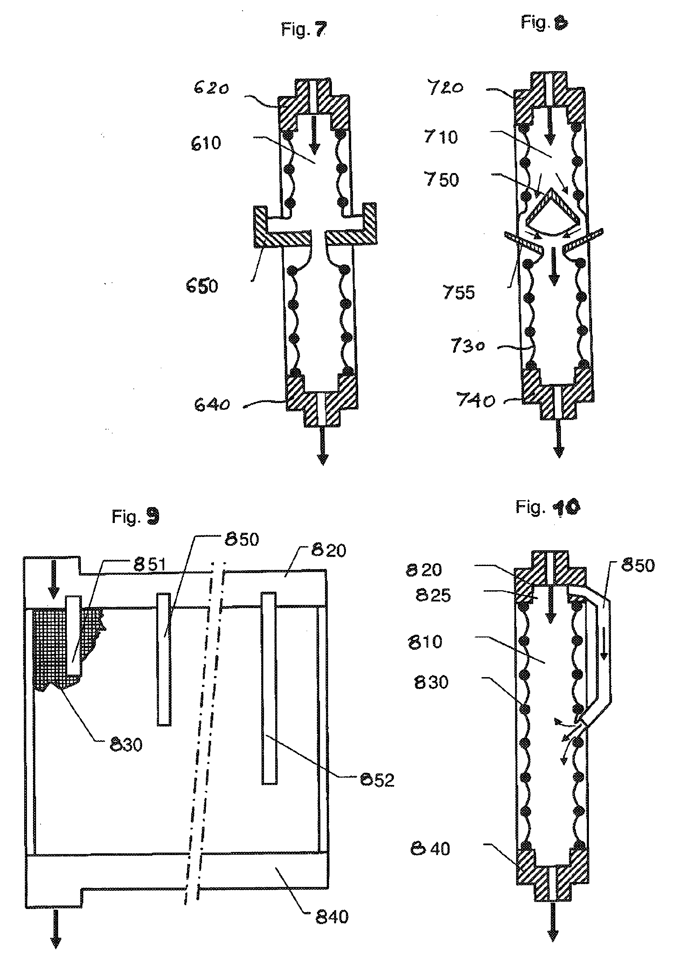

La figure 7 représente un sixième mode de réalisation de l'invention. Un réservoir tampon 640 a été inséré dans le flux de fluide absorbant 610. Deux parois verticales forment un collecteur dans lequel les grilles déversent directement le flux de fluide absorbant. Le réservoir tampon 650 stocke temporairement le fluide absorbant avant de le rediriger entre les grilles 630. Le stockage intermédiaire dans le réservoir tampon a pour effet de mélanger le flux de fluide absorbant et la couche de surface chargée en eau absorbée sera diluée dans le reste du flux, de sorte qu'en aval du réservoir tampon, la couche de surface a une concentration en eau et/ou une température plus faible qu'en amont et présente une capacité d'absorption améliorée. Au moins deux variantes d'évacuation du réservoir peuvent être envisagées, à savoir des orifices distincts qui auront pour effet de maximiser le mélange du fluide absorbant, ou une fente, qui aura pour effet de maximiser la distribution du fluide absorbant dans les grilles 630.

La figure 8 représente un septième mode de réalisation de l'invention. Deux lames 750 sont agencées dans le flux de fluide absorbant et le séparent en deux flux secondaires qui sont ensuite réunis par deux lames convergentes 755 et qui le redistribuent entre les deux grilles. Lors de ces transformations du flux par les lames 750 et 755, le fluide absorbant 710 est agité et la couche de surface est mélangée dans le reste du flux de fluide absorbant 710. Il en résulte une uniformisation de la température et de la concentration en eau dans le bromure de lithium qui lui permet d'absorber plus d'eau en aval des lames 750 et 755.

Les figures 9 et 10 représentent une plaque selon un huitième mode de réalisation de l'invention, où trois tubes d'injection 850, 851 et 852 alimentent le flux principal de bromure de lithium le long de la grille 830. Aux endroits où les flux secondaires sont injectés, des remous sont provoqués, de sorte que le flux devient instable et une homogénéisation de la température et/ou de la concentration en eau dans le bromure de lithium s'opère. La couche externe du flux se mélange dans le reste du flux et la température et/ou la concentration en eau du bromure de lithium baisse dans la zone à proximité de la grille, ce qui permet d'augmenter l'efficacité de l'absorption et du climatiseur. Les tubes 850, 851, 852 sont par exemple positionnés à un quart, à la moitié et aux trois quarts de la hauteur de la grille pour effectuer trois régénérations du flux de fluide absorbant afin de maximiser l'efficacité. Les tubes d'injection 850, 851, 852 sont directement reliés à la chambre principale d'alimentation 825 pour éviter d'ajouter une pompe spécifique d'alimentation en bromure de lithium pour les flux secondaires.

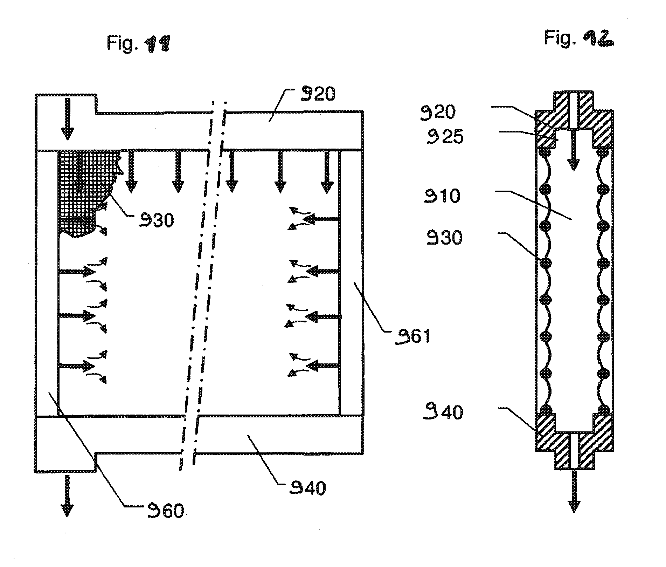

Les figures 11 et 12 représentent une plaque selon un neuvième mode de réalisation de l'invention, où les parois latérales 960 et 961 du cadre alimentent le flux principal de bromure de lithium le long de la grille 930. Le long des parois latérales 960 et 961 où les flux secondaires sont injectés, un brassage est provoqué, de sorte que le flux devient instable et une homogénéisation de la température et/ou de la concentration en eau dans le bromure de lithium s'opère. La couche externe du flux se mélange dans le reste du flux et la température et/ou la concentration en eau du bromure de lithium baisse dans la zone à proximité de la grille, ce qui permet d'augmenter l'efficacité de l'absorption et du climatiseur. Les parois latérales 60 et 61 sont directement reliées à la chambre principale d'alimentation 925 pour éviter d'ajouter une pompe spécifique d'alimentation en bromure de lithium pour les flux secondaires.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, on peut envisager de multiplier les moyens de turbulence sur une même plaque et on peut aussi mixer leur usage pour implémenter sur une même plaque plusieurs mises en oeuvre différentes.

En particulier, il est fait référence à l'intégration d'un dispositif de mélange dans le flux de fluide absorbant, mais il peut également être envisagé d'en intégrer plusieurs à la suite. Enfin, on pourrait également envisager d'implémenter un orifice de trop plein dans le réservoir tampon pour prévenir tout débordement.

En particulier, on peut envisager de multiplier les orifices d'injection sur chaque tube d'injection, de sorte que plusieurs régénérations de fluide absorbant soient effectuées le long d'un même tube d'injection.

## Revendications

1. Plaque d'absorption de climatiseur pour véhicule, traversée par un flux de fluide absorbant (110 ; ... ; 910) s'écoulant le long d'au moins une surface d'échange (130 ; ... ; 930), l'absorption exothermique d'un fluide réfrigérant se faisant au travers de ladite au moins une surface d'échange (130 ; ... ; 930) par augmentation d'une concentration du fluide réfrigérant dans le fluide absorbant (110 ; ... ; 910), la plaque comportant le long de ladite au moins une surface d'échange (130 ; ... ; 930), des moyens d'homogénéisation (150 ; 255 ; 360 ; 470 ; 580 ; 650 ; 750, 755 ; 850 ; 960, 961) de la température du flux de fluide absorbant (110; ... ; 910), **caractérisée en ce que** les moyens d'homogénéisation sont des moyens de turbulence distincts de ladite au moins une surface d'échange (130 ; ... ; 930) et augmentant la turbulence du flux de fluide absorbant (110 ; ... ; 930) le long de ladite au moins une surface d'échange (130 ; ... ; 930).

2. Plaque d'absorption selon la revendication 1, **caractérisée en ce que** les moyens d'homogénéisation sont au moins un obstacle (150 ; 255 ; 360 ; 470 ; 580 ; 650 ; 750, 755) agencé dans le flux de fluide absorbant (110 ; ... ; 710).

3. Plaque d'absorption selon la revendication 2, la plaque comportant un cadre (120, 140 ; 220, 240) maintenant en place deux grilles d'échange (130 ; 230) formant deux surfaces d'échange entre lesquelles est défini un conduit pour le flux de fluide absorbant (110 ; 210), **caractérisée en ce que** ledit au moins un obstacle (150 ; 255) est agencé entre les deux grilles d'échange (130 ; 230) et maintenu en place sur le cadre (120, 140 ; 220 ; 240) par des moyens de maintien.

4. Plaque d'absorption selon la revendication 2, la plaque comportant un cadre (220, 240) maintenant en place au moins une grille d'échange (230) définissant la surface d'échange pour le flux de fluide absorbant (210), **caractérisée en ce que** ledit au moins un obstacle (255) est agencé sur la grille d'échange (230).

5. Plaque d'absorption selon la revendication 4, **caractérisée en ce que** ledit au moins un obstacle (255) sert de renfort à la grille d'échange (230).

6. Plaque d'absorption selon la revendication 1, **caractérisée en ce que** les moyens d'homogénéisation sont des moyens d'injection de vapeur de fluide réfrigérant (360) aptes à injecter de la vapeur de fluide réfrigérant (365) dans le flux de fluide absorbant (310) au niveau de ladite au moins une surface d'échange.

7. Plaque d'absorption selon la revendication 6, la plaque comportant un cadre (320, 340) maintenant en place au moins une grille d'échange (330) définissant ladite au moins une surface d'échange pour le flux de fluide absorbant (310), **caractérisée en ce que** les moyens d'injection de vapeur de fluide réfrigérant (360) servent de renfort à la grille d'échange (330).

8. Plaque d'absorption selon la revendication 1, **caractérisée en ce que** les moyens d'homogénéisation sont des moyens de chauffage (470) aptes à créer un courant chaud à contre-courant local du flux de fluide absorbant (410).

9. Plaque d'absorption selon la revendication 8, la plaque comportant un cadre (420, 440) maintenant en place au moins une grille d'échange (430) définissant ladite au moins une surface d'échange pour le flux de fluide absorbant (410), **caractérisée en ce que** les moyens de chauffage (470) servent de renfort à la grille d'échange (430).

10. Plaque d'absorption selon la revendication 1, **caractérisée en ce que** les moyens d'homogénéisation sont des moyens de vibration (580) aptes à faire vibrer au moins une partie de la plaque d'absorption.

11. Plaque d'absorption selon la revendication 10, la plaque comportant un cadre (520, 540) maintenant en place au moins une grille d'échange (30) définissant ladite au moins une surface d'échange pour le flux de fluide absorbant (10), **caractérisée en ce que** les moyens de vibration (580) sont au moins un renfort de la grille d'échange (530) ledit renfort comprenant un vibrateur apte à faire vibrer la grille d'échange (530).

12. Plaque d'absorption selon la revendication 10 ou 11, la plaque comportant un cadre (520, 540) maintenant en place deux grilles d'échange (530) entre lesquelles est défini un conduit pour le flux de fluide absorbant (510), **caractérisée en ce que** les moyens de vibration (580) sont au moins un renfort agencé sur chaque grille d'échange (530), chacun disposé en quinconce par rapport au flux de fluide absorbant (510) et comportant chacun un vibrateur apte à faire vibrer chaque grille d'échange (530) avec des phases d'oscillation différentes pour chaque vibrateur.

13. Plaque d'absorption selon la revendication 1, **caractérisée en ce que** les moyens d'homogénéisation sont un réservoir tampon (40).

14. Plaque d'absorption selon la revendication 13, **caractérisée en ce que** le réservoir tampon (650) comporte une entrée pour capter le flux de fluide absorbant (610) s'écoulant le long de ladite au moins une surface d'échange (30), un réservoir de mélange du fluide absorbant (610) et au moins une sortie agencée pour distribuer le flux de fluide absorbant (610) mélangé sur ladite au moins une surface d'échange (630).

15. Plaque d'absorption selon la revendication 13, la plaque comportant un cadre maintenant en place deux grilles d'échange (630) formant deux surface d'échange et entre lesquelles est défini un conduit pour le flux de fluide absorbant (610), **caractérisée en ce que** l'entrée du réservoir tampon (650) est un collecteur formé par au moins deux parois entre lesquelles les deux grilles d'échange (630) déversent le flux de fluide absorbant (610) et **en ce que** la dite au moins une sortie est une série de trous aptes à évacuer le fluide absorbant (610) entre les deux grilles d'échange (630).

16. Plaque d'absorption selon la revendication 13, la plaque comportant un cadre maintenant en place deux grilles d'échange (630) formant deux surface d'échange et entre lesquelles est défini un conduit pour le flux de fluide absorbant (610), **caractérisée en ce que** l'entrée du réservoir tampon (650) est un collecteur formé par au moins deux parois entre lesquelles les deux grilles d'échange (630) déversent le flux de fluide absorbant (610) et **en ce que** la dite au moins une sortie est une fente apte à évacuer le fluide absorbant (610) entre les deux grilles d'échange (630).

17. Plaque d'absorption selon la revendication 15 ou 16, **caractérisée en ce que** le réservoir tampon (640) est fixé au cadre et sert de renfort aux grilles d'échange (630).

18. Plaque d'absorption selon la revendication 1, **caractérisée en ce que** les moyens de d'homogénéisation sont des moyens de séparation du flux principal en flux secondaires, associés à des moyens de collection aptes à collecter les flux secondaires pour reformer le flux principal.

19. Plaque d'absorption selon la revendication 18, **caractérisée en ce que** les moyens de séparation sont au moins deux lames divergentes (750) agencées dans le flux de fluide absorbant (710), et **en ce que** les moyens de collection sont deux lames convergentes (755) agencées en aval des lames divergentes (750).

20. Plaque d'absorption selon la revendication 1, **caractérisée en ce qu'**elle comporte une chambre d'alimentation principale (825 ; 925) agencée en amont de ladite au moins une surface d'échange (830 ; 930) et créant un flux principal de fluide absorbant (810 ; 910) s'écoulant le long de ladite au moins une surface d'échange (830 ; 930), et **en ce que** la plaque comporte le long de ladite au moins une surface d'échange (830 ; 930) au moins un moyen d'alimentation secondaire (850 , 851, 852 ; 960, 961) du flux principal de fluide absorbant (810 ; 910) agencé de telle sorte qu'il provoque un brassage du flux principal de fluide absorbant.

21. Plaque d'absorption selon la revendication 20, **caractérisée en ce que** ledit au moins un moyen d'alimentation secondaire (850 , 851, 852 ; 960, 961) est un moyen d'injection apte à injecter du fluide absorbant supplémentaire dans le flux principal de fluide absorbant (810 ; 910).

22. Plaque d'absorption selon la revendication 21, **caractérisée en ce que** ledit moyen d'injection est au moins un tube d'injection.

23. Plaque d'absorption selon la revendication 22, **caractérisée en ce que** ledit au moins un tube d'injection est connecté à la chambre d'alimentation principale (825 ; 925).

24. Plaque d'absorption selon la revendication 20, **caractérisée en ce que** ledit au moins un moyen d'alimentation secondaire (850, 851, 852 ; 960, 961) est apte à alimenter latéralement le flux principal de fluide absorbant (810 ; 910) le long de ladite au moins une surface d'échange (830 ; 930).

25. Plaque d'absorption selon la revendication 24, **caractérisée en ce que** ledit au moins un moyen d'alimentation secondaire est connecté avec la chambre d'alimentation principale (825 ; 925).

26. Plaque d'absorption selon la revendication 25, la chambre d'alimentation principale (825 ; 925) étant agencée dans la partie supérieure du cadre, **caractérisée en ce que** ledit au moins un moyen d'alimentation secondaire est agencé dans les parties latérales (960, 961) du cadre.

27. Climatiseur pour véhicule comprenant au moins une plaque d'absorption selon l'une des revendications 1 à 26.

28. Véhicule automobile comportant au moins un climatiseur par absorption selon la revendication 27.

## Patentansprüche

1. Absorptionsplatte einer Klimaanlage für ein Fahrzeug, durchquert von einem Absorptionsfluid (110 ; ... ; 910), das entlang mindestens einer Austauschfläche (130; ... ; 930) fließt, wobei die exothermische Absorption eine Kühlfluids mit Hilfe der mindestens einen Austauschfläche (130; ... ; 930) durch die Erhöhung einer Konzentration des Kühlfluids im Absorptionsfluid (110 ; ... ; 910) erfolgt, wobei die Platte entlang der mindestens einen Austauschfläche Mittel zur Homogenisierung (150; 255; 360; 470; 580; 650; 750, 755; 850; 960, 961) der Temperatur des Flusses von Absorptionsfluid (110; ...; 910) umfasst, **dadurch gekennzeichnet, dass** die Mittel zur Homogenisierung verschiedene Verwirbelungsmittel der mindestens einen Austauschfläche (130; ... ; 930) sind und die Verwirbelung des Flusses von Absorptionsfluid (110; ...; 930) entlang der mindestens einen Austauschfläche (130; ... ; 930) erhöhen.

2. Absorptionsplatte nach Anspruch 1, **dadurch gekennzeichnet, dass** die Mittel zur Homogenisierung mindestens ein Hindernis (150; 255; 360; 470; 580; 650; 750, 755) sind, das im Fluss des Absorptionsfluids (110; ...; 710) angeordnet ist.

3. Absorptionsplatte nach Anspruch 2, wobei die Platte einen Rahmen (120, 140; 220, 240) umfasst, der zwei Austauschgitter (130; 230) in ihrer Position hält, die zwei Austauschflächen bilden, zwischen denen eine Leitung für den Fluss des Absorptionsfluids (110; 210) definiert ist, **dadurch gekennzeichnet, dass** das mindestens eine Hindernis (150; 255) zwischen den zwei Austauschgittern (130; 230) angeordnet und in seiner Position auf dem Rahmen (120, 140; 220; 240) durch Haltemittel gehalten wird.

4. Absorptionsplatte nach Anspruch 2, wobei die Platte einen Rahmen (220, 240) umfasst, der mindestens ein Austauschgitter (230) in seiner Position hält, das die Austauschfläche für den Fluss von Absorptionsfluid (210) definiert, **dadurch gekennzeichnet, dass** das mindestens eine Hindernis (255) auf dem Austauschgitter (230) angeordnet ist.

5. Absorptionsplatte nach Anspruch 4, **dadurch gekennzeichnet, dass** das mindestens eine Hindernis (255) als Verstärkung für das Austauschgitter (230) dient.

6. Absorptionsplatte nach Anspruch 1, **dadurch gekennzeichnet, dass** die Mittel zur Homogenisierung Mittel zur Injektion von Dampf von Kühlfluid (360) sind, die ausgelegt sind, um Dampf von Kühlfluid (365) in den Fluss von Absorptionsfluid (310) auf der Ebene der mindestens einen Austauschfläche zu injizieren.

7. Absorptionsplatte nach Anspruch 6, wobei die Platte einen Rahmen (320, 340) umfasst, der mindestens ein Austauschgitter (330) in seiner Position hält, das die mindestens eine Austauschfläche für den Fluss von Absorptionsfluid (310) definiert, **dadurch gekennzeichnet, dass** die Mittel zur Injektion von Dampf von Kühlflüssigkeit (360) zur Verstärkung für das Austauschgitter (330) dienen.

8. Absorptionsplatte nach Anspruch 1, **dadurch gekennzeichnet, dass** die Mittel zur Homogenisierung Heizmittel (470) sind, die ausgelegt sind, um einen heißen Strom mit lokalem Gegenstrom des Flusses aus Absorptionsfluid (410) zu erzeugen.

9. Absorptionsplatte nach Anspruch 8, wobei die Platte einen Rahmen (420, 440) umfasst, der mindestens ein Austauschgitter (430) in seiner Position hält, das die mindestens eine Austauschfläche für den Fluss von Absorptionsfluid (410) definiert, **dadurch gekennzeichnet, dass** die Heizmittel (470) zur Verstärkung für das Austauschgitter (430) dienen.

10. Absorptionsplatte nach Anspruch 1, **dadurch gekennzeichnet, dass** die Mittel zur Homogenisierung Vibrationsmittel (580) sind, die ausgelegt sind, um mindestens einen Teil der Absorptionsplatte vibrieren zu lassen.

11. Absorptionsplatte nach Anspruch 10, wobei die Platte einen Rahmen (520, 540) umfasst, der mindestens ein Austauschgitter (30) in seiner Position hält, das die mindestens eine Austauschfläche für den Fluss von Absorptionsfluid (10) definiert, **dadurch gekennzeichnet, dass** die Vibrationsmittel (580) mindestens eine Verstärkung des Austauschgitters (530) darstellen, wobei die Verstärkung einen Vibrator umfasst, der ausgelegt ist, um das Austauschgitter (530) vibrieren zu lassen.

12. Absorptionsplatte nach Anspruch 10 oder 11, wobei die Platte einen Rahmen (520, 540) umfasst, die zwei Austauschgitter (530) in ihrer Position hält, zwischen denen eine Leitung für den Fluss von Absorptionsfluid (510) definiert ist, **dadurch gekennzeichnet, dass** die Vibrationsmittel (580) mindestens eine Verstärkung darstellen, die auf jedem Austauschgitter (530) angeordnet ist, jeweils gegeneinander versetzt mit Bezug auf den Fluss von Absorptionsfluid (510) angeordnet und umfassend jeweils einen Vibrator, der ausgelegt ist, um jedes Austauschgitter (530) mit verschiedenen Oszillationsphasen für jeden Vibrator vibrieren zu lassen.

13. Absorptionsplatte nach Anspruch 1, **dadurch gekennzeichnet, dass** die Mittel zur Homogenisierung ein Pufferbehälter (40) sind.

14. Absorptionsplatte nach Anspruch 13, **dadurch gekennzeichnet, dass** der Pufferbehälter (650) einen Eingang umfasst, um den Fluss von Absorptionsfluid (610) zu erfassen, der entlang der mindestens einen Austauschfläche (30) fließt, einen Behälter zur Mischung des Absorptionsfluids (610) und mindestens einen Ausgang, der angeordnet ist, um den Fluss von gemischtem Absorptionsfluid (610) auf der mindestens einen Austauschfläche (630) zu verteilen.

15. Absorptionsplatte nach Anspruch 13, wobei die Platte einen Rahmen umfasst, der zwei Austauschgitter (630) in ihrer Position hält, die zwei Austauschflächen bilden, und zwischen denen eine Leitung für den Fluss von Absorptionsfluid (610) definiert ist, **dadurch gekennzeichnet, dass** der Eingang des Pufferbehälters (650) eine Sammelvorrichtung ist, die aus mindestens zwei Wänden gebildet ist, zwischen denen die zwei Austauschgitter (630) den Fluss von Absorptionsfluid (610) abfließen lassen, und dadurch, dass der mindestens eine Ausgang eine Reihe von Löchern darstellt, die ausgelegt sind, um das Absorptionsfluid (610) zwischen den zwei Austauschgittern (630) abzuleiten.

16. Absorptionsplatte nach Anspruch 13, wobei die Platte einen Rahmen umfasst, der zwei Austauschgitter (630) in ihrer Position hält, die zwei Austauschflächen bilden, und zwischen denen eine Leitung für den Fluss von Absorptionsfluid (610) definiert ist, **dadurch gekennzeichnet, dass** der Eingang des Pufferbehälters (650) eine Sammelvorrichtung ist, die aus mindestens zwei Wänden gebildet ist, zwischen denen die zwei Austauschgitter (630) den Fluss von Absorptionsfluid (610) abfließen lassen, und dadurch, dass der mindestens eine Ausgang ein Schlitz ist, der ausgelegt ist, um das Absorptionsfluid (610) zwischen den zwei Austauschgittern (630) abzuleiten.

17. Absorptionsplatte nach Anspruch 15 oder 16, **dadurch gekennzeichnet, dass** der Pufferbehälter (640) an den Rahmen befestigt ist und als Verstärkung für die Austauschgitter (630) dient.

18. Absorptionsplatte nach Anspruch 1, **dadurch gekennzeichnet, dass** die Mittel zur Homogenisierung Mittel zur Trennung des Hauptflusses in sekundäre Flüsse sind, die mit Sammelmitteln assoziiert sind, die ausgelegt sind, um die sekundären Flüsse zu sammeln, um den Hauptfluss neu zu bilden.

19. Absorptionsplatte nach Anspruch 18, **dadurch gekennzeichnet, dass** die Mittel zur Trennung mindestens zwei divergierende Blätter (750) sind, das im Fluss von Absorptionsfluid (710) angeordnet sind, und dadurch, dass die Sammelmittel zwei konvergierende Blätter (755) sind, die nachgelagert von den divergierenden Blättern (750) angeordnet sind.

20. Absorptionsplatte nach Anspruch 1, **dadurch gekennzeichnet, dass** sie eine Hauptversorgungskammer (825, 925) umfasst, die vorgelagert von der mindestens einen Austauschfläche (830; 930) angeordnet ist und einen Hauptfluss von Absorptionsfluid (810, 910) erzeugt, der entlang der mindestens einen Austauschfläche (830, 930) fließt, und dadurch, dass die Platte entlang der mindestens einen Austauschfläche (830; 930) mindestens ein sekundäres Versorgungsmittel (850, 851, 852; 960, 961) des Hauptflusses von Absorptionsfluid (810, 910) umfasst, das derart angeordnet ist, dass es eine Durchmischung des Hauptflusses von Absorptionsfluids hervorruft.

21. Absorptionsplatte nach Anspruch 20, **dadurch gekennzeichnet, dass** das mindestens eine sekundäre Versorgungsmittel (850, 851, 852; 960, 961) ein Injektionsmittel ist, das ausgelegt ist, um zusätzliches Absorptionsfluid in den Hauptfluss von Absorptionsfluid (810; 910) zu injizieren.

22. Absorptionsplatte nach Anspruch 21, **dadurch gekennzeichnet, dass** das Injektionsmittel mindestens ein Injektionsrohr ist.

23. Absorptionsplatte nach Anspruch 22, **dadurch gekennzeichnet, dass** das mindestens eine Injektionsrohr mit der Hauptversorgungskammer (825; 925) verbunden ist.

24. Absorptionsplatte nach Anspruch 20, **dadurch gekennzeichnet, dass** das mindestens eine sekundäre Versorgungsmittel (850, 851, 852; 960, 961) ausgelegt ist, um den Hauptfluss von Absorptionsfluid (810; 910) seitlich entlang der mindestens einen Austauschfläche (830; 930) zu versorgen.

25. Absorptionsplatte nach Anspruch 24, **dadurch gekennzeichnet, dass** das mindestens eine sekundäre Versorgungsmittel mit der Hauptversorgungskammer (825; 925) verbunden ist.

26. Absorptionsplatte nach Anspruch 25, wobei die Hauptversorgungskammer (825;925) im oberen Teil des Rahmens angeordnet ist, **dadurch gekennzeichnet, dass** das mindestens eine sekundäre Versorgungsmittel in den seitlichen Teilen (960, 961) des Rahmens angeordnet ist.

27. Klimaanlage für ein Fahrzeug, umfassend mindestens eine Absorptionsplatte nach einem der Ansprüche 1 bis 26.

28. Kraftfahrzeug, umfassend mindestens eine Klimaanlage durch Absorption nach Anspruch 27.

## Claims

1. Air-conditioner absorption plate for a vehicle, through which a flow of absorbent fluid (110; ...; 910) passes, flowing along at least one exchange surface (130; ...; 930), the exothermic absorption of a refrigeration fluid taking place through said at least one exchange surface (130; ...; 930) through increase in a concentration of the refrigerating fluid in the absorbent fluid (110; ...; 910), the plate comprising, along said at least one exchange surface (130; ...; 930), means (150; 255; 360; 470; 580; 650; 750; 755; 850; 960, 961) for homogenising the temperature of the flow of absorbent fluid (110; ...; 910), **characterised in that** the homogenisation means are turbulence means distinct from said at least one exchange surface (130; ...; 930) and increasing the turbulence of the flow of absorbent fluid (110; ...; 930) along said at least one exchange surface (130; ...; 930).

2. Absorption plate according to claim 1, **characterised in that** the homogenisation means are at least one obstacle (150; 255; 360; 470; 580; 650; 750, 755) arranged in the flow of absorbent fluid (110; ...; 710).

3. Absorption plate according to claim 2, the plate comprising a frame (120; 140; 220; 240) holding in place two exchange grilles (130; 230) forming two exchange surfaces between which a conduit is defined for the flow of absorbent fluid (110; 210), **characterised in that** said at least one obstacle (150; 255) is arranged between the two exchange grilles (130; 230) and held in place on the frame (120, 140; 220; 240) by holding means.

4. Absorption plate according to claim 2, the plate comprising a frame (220, 240) holding in place at least one exchange grille (230) defining the exchange surface for the flow of absorbent fluid (210), **characterised in that** said at least one obstacle (255) is arranged on the exchange grille (230).

5. Absorption plate according to claim 4, **characterised in that** said at least one obstacle (255) serves as a reinforcement for the exchange grille (230).

6. Absorption plate according to claim 1, **characterised in that** the homogenisation means are means for injecting refrigerating fluid vapour (360) able to inject refrigerating fluid vapour (365) into the flow of absorbent fluid (310) at said at least one exchange surface.

7. Absorption plate according to claim 6, the plate comprising a frame (320, 340) holding in place at least one exchange grille (330) defining said at least one exchange surface for the flow of absorbent fluid (310), **characterised in that** the means for injecting refrigerating fluid vapour (360) serve as a reinforcement for the exchange grille (330).

8. Absorption plate according to claim 1, **characterised in that** the homogenisation means are heating means (470) able to create a local hot reverse current of the flow of absorbent fluid (410).

9. Absorption plate according to claim 8, the plate comprising a frame (420, 440) holding in place at least one exchange grille (430) defining said at least one exchange surface for the flow of absorbent fluid (410), **characterised in that** the heating means (470) serve as a reinforcement for the exchange grille (430).

10. Absorption plate according to claim 1, **characterised in that** the homogenisation means are vibration means (580) able to vibrate at least part of the absorption plate.

11. Absorption plate according to claim 10, the plate comprising a frame (520, 540) holding in place at least one exchange grille (30) defining said at least one exchange surface for the flow of absorbent fluid (10), **characterised in that** the vibration means (580) are at least a reinforcement of the exchange grille (530), said reinforcement comprising a vibrator able to vibrate the exchange grille (530).

12. Absorption plate according to claim 10 or 11, the plate comprising a frame (520, 540) holding in place two exchange grilles (530) between which a conduit is defined for the flow of absorbent fluid (510), **characterised in that** the vibration means (580) are at least a reinforcement arranged on each exchange grille (530), each disposed in a zigzag with respect to the flow of absorbent fluid (510) and each comprising a vibrator able to vibrate each exchange grille (530) with different oscillation phases for each vibrator.

13. Absorption plate according to claim 1, **characterised in that** the homogenisation means are a buffer tank (40).

14. Absorption plate according to claim 13, **characterised in that** the buffer tank (650) comprises an inlet for capturing the flow of absorbent fluid (610) flowing along said at least one exchange surface (30) a tank for mixing the absorbent fluid (610) and at least one outlet arranged so as to distribute the flow of mixed absorbent fluid (610) on said at least one exchange surface (630).

15. Absorption plate according to claim 13, the plate comprising a frame holding in place two exchange grilles (630) forming two exchange surfaces and between which a conduit is defined for the flow of absorbent fluid (610), **characterised in that** the inlet of the buffer tank (650) is a manifold formed by at least two walls between which the two exchange grilles (630) pour the flow of absorbent fluid (610) and **in that** said at least one outlet is a series of holes able to discharge the absorbent fluid (610) between the two exchange grilles (630).

16. Absorption plate according to claim 13, the plate comprising a frame holding in place two exchange grilles (630) forming two exchange surfaces between which a conduit is defined for the flow of absorbent fluid (610), **characterised in that** the inlet of the buffer tank (650) is a manifold formed by at least two walls between which the two exchange grilles (630) pour the flow of absorbent fluid (610) and **in that** said at least one outlet is a slot able to discharge the absorbent fluid (610) between the two exchange grilles (630).

17. Absorption plate according to claim 15 or 16, **characterised in that** the buffer tank (640) is fixed to the frame and serves as a reinforcement for the exchange grilles (630).

18. Absorption plate according to claim 1, **characterised in that** the homogenisation means are means for separating the main flow into secondary flows, associated with collection means able to collect the secondary flows in order to form the main flow.

19. Absorption plate according to claim 18, **characterised in that** the separation means are at least two divergent blades (750) arranged in the flow of absorbent fluid (710), and **in that** the collection means are two convergent blades (755) arranged downstream of the divergent blades (750).

20. Absorption plate according to claim 1, **characterised in that** it comprises a main supply chamber (825; 925) arranged upstream of said at least one exchange surface (830; 930) and creating a main flow of absorbent fluid (810; 910) flowing along said at least at least one exchange surface (830; 930), and **in that** the plate comprises, along said at least one exchange surface (830; 930), at least one secondary supply means (850, 851, 852; 960, 961) for the main flow of absorbent fluid (810; 910) arranged so that it causes stirring of the main flow of absorbent fluid.

21. Absorption plate according to claim 20, **characterised in that** said at least one secondary supply means (850, 851, 852; 960, 961) is an injection means able to inject additional absorbent fluid into the main flow of absorbent flow (810; 910).

22. Absorption plate according to claim 21, **characterised in that** said injection means is at least one injection tube.

23. Absorption plate according claim 22, **characterised in that** said at least one injection tube is connected to the main supply chamber (825; 925).

24. Absorption plate according to claim 20, **characterised in that** said at least one secondary supply means (850, 851, 852; 960, 961) is able to supply laterally the main flow of absorbent fluid (810; 910) along said at least one exchange surface (830; 930).

25. Absorption plate according to claim 24, **characterised in that** said at least one secondary supply means is connected to the main supply chamber (825; 925).

26. Absorption plate according to claim 25, the main supply chamber (825; 925) being arranged in the top part of the frame, **characterised in that** said at least one secondary supply means is arranged in the lateral parts (960, 961) of the frame.

27. Air conditioner for a vehicle, comprising at least one absorption plate according to one of claims 1 to 26.

28. Motor vehicle comprising at least one air conditioner working by absorption according to claim 27.
